# DEMANDE DE BREVET EUROPEEN

(11) **EP 4 252 960 A1**
(43) Date de publication de la demande: **04.10.2023**
(21) Numéro de dépôt: 23164976.5
(22) Date de dépôt: 29.03.2023
(51) Int. Cl.: B23P 19/10, B25J 17/02

(54) **DISPOSITIF D'AUTO-CENTRAGE POUR MATÉRIEL D'ASSEMBLAGE INDUSTRIEL**

(30) Priorité: 30.03.2022 FR 2202851
(71) Demandeur: Allegrini Techniques d'Assemblage, 35132 Vezin-le-Coquet (FR)
(72) Inventeur: ALLEGRINI, Grégoire, 35132 Vezin-le-Coquet (FR)
(74) Mandataire: Ipsilon

(57) **Abrégé**

L'invention concerne un plateau mobile (1) pour dispositif d'auto-centrage pour un matériel d'assemblage industriel. L'invention se rapporte également au dispositif d'auto-centrage industriel lui-même, et à une machine de déplacement et de positionnement de pièces se déplaçant de poste à poste tel qu'un convoyeur ou plateau tournant comprenant un tel dispositif d'autocentrage.

## Description

L'invention se rapporte à un plateau pour dispositif d'auto-centrage pour un matériel d'assemblage industriel. L'invention se rapporte également au dispositif d'auto-centrage industriel lui-même, et à une machine de déplacement et de positionnement de pièces se déplaçant de poste à poste tel qu'un convoyeur ou plateau tournant comprenant un tel dispositif d'auto-centrage.

Lors d'un assemblage automatique d'une pièce sur un ensemble, il existe plusieurs problématiques. La conception du produit identifie des cotes référencées, tolérancées et contrôlées. Malheureusement ces cotes ne sont pas toujours exploitables ou exploitées lors de la mise en oeuvre d'un procédé d'assemblage. De plus, il peut y avoir un manque de répétabilité du positionnement dû au déplacement des pièces à assembler de poste à poste lors du procédé d'assemblage sur une chaîne de production et/ou un manque de répétabilité du positionnement dû au procédé lors des manipulations du produit, même lorsqu'il s'agit d'un robot doté d'un système de préhension.

Lorsque l'on additionne les chaînes de cotes et les défauts géométriques de chacun des procédés et les dispersions dus au tolérancement produit et les jeux minimums de positionnement, on constate par exemple un fort risque de collision, donc de détérioration du produit et une augmentation des arrêts machine.

De tels problèmes peuvent être rencontrés sur des chaînes de production comme des chaînes décrites dans le document brevet US5577597.

En parallèle à cela, le document brevet CN110757197 décrit par exemple un dispositif de fixation automatique adapté à une fraiseuse à commande numérique.

Un autre exemple est décrit dans le document brevet EP1036630 avec un système d'indexage et de blocage d'un porte-pièce, remarquable en ce que les moyens d'indexage et de blocage sont constitués d'un guide venant se positionner dans des moyens d'auto-centrage.

Toutefois, dans ces deux exemples, l'outillage décrit n'est pas adapté à une chaîne de production plus générale, en particulier comme décrite dans le document brevet US5577597.

Ceci révèle néanmoins que la problématique des défauts de positionnement est récurrente pour toute manipulation nécessitant un alignement précis de pièces et/ou d'outils sur une chaîne de production. Il manque cependant un dispositif général adapté à l'assemblage de pièces.

Le document brevet JP H06 297378 A décrit un plateau mobile pour dispositif d'auto-centrage. Toutefois, la solution décrite dans ce document manque de compacité et de simplicité.

Le but de l'invention est donc de pallier les inconvénients de l'art antérieur.

La présente invention s'intègre dans une logique de réduction de la chaîne de cote dans les procédés mis en oeuvre et de limitation des dispersions au plus près des produits à assembler en utilisant une compliance qui permet au procédé dit de dépose (manipulateur) de repositionner le procédé de transport dans une position dite de référence sans créer de contrainte mécanique.

Pour ce faire, l'invention concerne selon un premier aspect un plateau mobile intégrable dans un dispositif d'auto-centrage d'une machine d'assemblage industriel. Selon un second aspect, l'invention concerne un dispositif d'auto-centrage d'une machine d'assemblage industriel qui comprend ledit plateau mobile intégrable et selon un troisième aspect, l'invention concerne une machine de déplacement et de positionnement de pièces se déplaçant de poste à poste comprenant un tel dispositif d'auto-centrage.

L'invention concerne donc un plateau mobile pour dispositif d'auto-centrage (en particulier d'une machine d'assemblage industriel) comprenant :
- un premier élément support et une deuxième élément support placés l'un au-dessus de l'autre selon un axe Z,
- au moins un premier moyen élastique placé entre le premier élément support et le deuxième élément support, ledit au moins un premier moyen élastique étant configuré de manière à permettre, d'une part un mouvement de va-et-vient en translation du premier élément support vis-à-vis du deuxième élément support dans au moins une direction parallèle à un plan X-Y sécant à l'axe Z et, d'autre part, un mouvement de va-et-vient en rotation du premier élément support vis-à-vis du deuxième élément support autour de l'axe Z ; et
- au moins un deuxième moyen élastique disposé de manière à fixer de manière mobile le premier élément support au deuxième élément support, ledit au moins un deuxième moyen élastique étant configuré de manière à permettre, d'une part un mouvement de va-et-vient en translation du premier élément support vis-à-vis du deuxième élément support selon l'axe Z et, d'autre part, un mouvement de va-et-vient en rotation du premier élément support vis-à-vis du deuxième élément support autour d'au moins un axe parallèle au plan X-Y.

Par « mouvement de va-et-vient », il est compris dans le contexte de la présente invention que la position et/ou l'orientation d'une pièce peuvent être modifiées lors de l'assemblage, puis revenir à une position et/ou orientation de référence.

Ainsi, l'un des avantages selon la présente invention est de pouvoir contrôler de manière élastique (c'est-à-dire avec un retour à une position initiale dite de référence) la position et l'orientation du premier élément support vis-à-vis du deuxième élément support (et vice et versa) de manière automatique et indépendante sans apport d'énergie extérieur (par exemple par l'emploi d'un moteur électrique). L'un des problèmes techniques résolus par l'objet de la présente invention est donc l'élimination des défauts d'alignement de pièces lors de leurs assemblages. C'est ce qui est appelé la « compliance ». L'objet selon la présente invention contribue donc à cet effet en fournissant un plateau mobile pour assemblage automatique d'une pièce à au moins une autre pièce (ou un ensemble de pièces) avec une compliance pouvant comprendre six degrés de liberté (mouvement(s) cartésien(s) dans trois directions X, Y, Z, et mouvement(s) angulaire(s) par rotation autour des axes X, Y, Z selon un référentiel X, Y, Z) et autocentrée sans l'apport d'énergie extérieure (par exemple un déplacement avec motorisation).

Diverses caractéristiques supplémentaires peuvent être prévues, seules ou en combinaison :
- ledit au moins un premier moyen élastique peut comprendre au moins un ressort d'un premier type présentant un axe de déformation privilégié. Par « axe de déformation privilégié », il est compris dans le contexte de la présente invention l'axe selon lequel le ressort peut être le plus étiré lorsqu'il est soumis à une force d'étirement extérieure et revenir à son état initial lorsqu'il n'est plus soumis à cette force d'étirement extérieure ;
- ledit au moins un premier moyen élastique peut comprendre au moins un ressort d'un premier type présentant au moins un axe de déformation secondaire. Par « axe de déformation secondaire », il est compris dans le contexte de la présente invention un axe de déformation différent de l'axe de déformation privilégié ;
- ledit au moins un premier moyen élastique peut comprendre au moins un ressort d'un premier type présentant un axe de déformation privilégié, ledit au moins un ressort de premier type étant disposé de manière à ce que son axe de déformation privilégié est, au repos, parallèle au plan X-Y. Par « repos », il est compris dans le contexte de la présente invention le niveau de déformation dudit au moins un premier moyen élastique lorsque le plateau mobile n'est soumis à aucune force extérieure dû au procédé d'assemblage (par exemple lors du positionnement d'une pièce). Ainsi, au « repos » ledit au moins un premier moyen élastique peut être sous tension, dû à son montage dans un plateau mobile selon la présente invention ;
- le plan X-Y peut être essentiellement perpendiculaire à l'axe Z ;
- ledit au moins un premier moyen élastique peut comprendre au moins deux, trois, quatre, cinq, six, sept, huit, neuf ou au moins dix desdits ressorts de premier type ;
- ledit au moins un premier moyen élastique peut comprendre au moins deux desdits ressorts de premier type, lesdits au moins deux ressorts de premier type présentant des axes de déformations privilégiés sécants ;
- ledit au moins un premier moyen élastique peut comprendre au moins trois, quatre, cinq, six, sept, huit, neuf ou au moins dix desdits ressorts de premier type, lesdits au moins trois, quatre, cinq, six, sept, huit, neuf ou au moins dix ressorts de premier type présentant des axes de déformations privilégiés sécants ;
- ledit au moins un premier moyen élastique peut comprendre quatre desdits ressorts de premier type, dont les axes de déformations privilégiés forment un polygone, tel qu'un carré ou un rectangle ;
- ledit au moins un deuxième moyen élastique peut comprendre au moins un ressort d'un deuxième type présentant un axe de déformation privilégié, ledit au moins un ressort de deuxième type étant disposé de manière à ce que son axe de déformation privilégié est, au repos, parallèle à l'axe Z ;
- ledit au moins un deuxième moyen élastique peut comprendre au moins un ressort d'un deuxième type présentant au moins un axe de déformation secondaire ;
- lesdits ressorts de deuxième type peuvent être de type identique auxdits ressorts de premier type (seuls leurs dispositions peuvent alors différer) ;
- ledit au moins un deuxième moyen élastique peut comprendre au moins trois, quatre, cinq, six, sept, huit, neuf ou au moins dix desdits ressorts de deuxième type ;
- lesdits au moins un deuxième moyen élastique peut comprendre au moins trois, quatre, cinq, six, sept, huit, neuf ou au moins dix desdits ressorts de deuxième type disposés de manière homogène quant au premier élément support et au deuxième élément support. Ainsi, la multiplication desdits ressorts de deuxième type répartis de manière homogène permet un mouvement élastique d'autant plus précis (c'est-à-dire un mouvement de va-et-vient comme décrit ci-dessus), les erreurs de positions de référence se compensant, lorsque le plateau mobile selon l'invention est soumis à une ou des pressions extérieures selon l'axe Z ;
- lesdits au moins un deuxième moyen élastique peut comprendre au moins trois, quatre, cinq, six, sept, huit, neuf ou au moins dix desdits ressorts de deuxième type peuvent être disposés sur les pourtours et/ou dans les angles du premier élément support et/ou deuxième élément support ;
- ledit au moins un deuxième moyen élastique peut comprendre préférentiellement quatre desdits ressorts de deuxième type. Lesdits quatre desdits ressorts de deuxième type peuvent être disposés dans les angles du premier élément support et/ou deuxième élément support ;
- lesdits ressorts de premier type peuvent comprendre des embouts, par exemple en laiton, configurés de manière à leur permettre d'être reliés au premier élément support et/ou au deuxième élément support ;
- lesdits embouts, par exemple en laiton, peuvent être configurés pour permettre les amplitudes de mouvements élastiques prédéterminés. Par exemple, lorsque des embouts sont placés aux extrémités de ressorts de premier type dans un logement accueillant l'ensemble, la différence d'espace entre le logement et l'ensemble « embouts et ressorts de premier type » va déterminer les amplitudes de mouvements autorisés ;
- ainsi, le premier élément support et le deuxième élément support peuvent comprendre chacun au moins un logement pour accueillir ledit au moins un premier moyen élastique ;
- ledit au moins un logement pour accueillir ledit au moins un premier moyen élastique peut être configuré de manière à permettre la déformation dudit moyen élastique dans trois directions X, Y, Z, et selon des mouvement(s) angulaire(s) par rotation autour des axes X, Y, Z selon le référentiel X, Y, Z ;
- ledit au moins un logement pour accueillir ledit au moins un deuxième moyen élastique peut être configuré de manière à permettre la déformation dudit moyen élastique dans trois directions X, Y, Z, et selon des mouvement(s) angulaire(s) par rotation autour des axes X, Y, Z selon le référentiel X, Y, Z ; et
- les amplitudes de mouvements autorisés (c'est-à-dire la différence de taille entre le ou les logements par rapport auxdits au moins un premier moyen élastique, tel(s) qu'un ou des ressorts de premiers type, et/ou auxdits au moins un deuxième moyen élastique, tel(s) qu'un ou des ressorts de deuxième type) peuvent être inférieurs ou égaux à 10 mm, inférieurs ou égaux à 9 mm, inférieurs ou égaux à 8 mm, inférieurs ou égaux à 7 mm, inférieurs ou égaux à 6 mm, inférieurs ou égaux à 5 mm, inférieurs ou égaux à 4 mm, inférieurs ou égaux à 3 mm, inférieurs ou égaux à 2 mm, inférieurs ou égaux à 1 mm, préférentiellement inférieurs ou égaux à 2 mm plus ou moins 1 mm.

L'invention concerne en outre un dispositif d'auto-centrage comprenant :
- un plateau mobile tel que décrit ci-dessus
- un moyen d'accostage à un repère fixe sur ledit plateau mobile, telle qu'une ouverture, une dépression ou une excroissance tel qu'un pion ; et
- optionnellement un porte-pièce relié audit plateau mobile, le moyen d'accostage à un repère fixe pouvant alors être placé sur le porte-pièce.

Le moyen d'accostage à un repère fixe sur ledit plateau mobile agit ainsi comme guide et évite une intervention mécanique extérieure pour l'alignement des pièces. Le guidage peut être assuré par une ouverture, une dépression ou une excroissance tel qu'un pion.

De manière préférée, le dispositif d'auto-centrage selon la présente invention permet l'assemblage de pièces.

Le dispositif d'auto-centrage selon la présente invention peut également être utilisé dans des procédés impliquant une étape de modification ou d'usinage d'une pièce et nécessitant une précision d'alignement des pièces en mouvement sur une chaîne de production lors de cette étape.

De manière préférée, le moyen d'accostage à un repère fixe sur ledit plateau, telle qu'une ouverture, une dépression ou une excroissance tel qu'un pion peut être présent sur un porte-pièce relié au plateau mobile selon la présente invention.

De plus, l'invention concerne une machine de déplacement et de positionnement de pièces se déplaçant de poste à poste tel qu'un convoyeur ou plateau tournant comprenant un dispositif d'auto-centrage tel que décrit ci-dessus.

Ainsi, l'objet de la présente invention permet, grâce à la compliance générée, d'aligner précisément deux pièces le temps d'un assemblage, d'une modification, d'un usinage, ou d'un contrôle, réduisant ainsi la chaîne de cote entre le procédé de mise en oeuvre qui transporte et manipule un ensemble de pièces sur une machine ou une ligne de production. Le dispositif selon la présente invention augmente la précision de l'alignement des pièces et la répétabilité de leur positionnement et par conséquent réduit les risques de collisions et/ou d'abrasions qui engendrent des détériorations sur le produit et/ou la chaîne de production elle-même générant ainsi des arrêts machine.

On décrira ci-après, à titre d'exemples non limitatifs, des formes d'exécution de la présente invention, en référence aux figures annexées sur lesquelles :
[Fig.1] représente une vue éclatée en perspective d'un mode de réalisation d'un plateau mobile pour dispositif d'auto-centrage selon l'invention ;
[Fig.2] représente une vue éclatée d'un mode de réalisation d'un plateau mobile pour dispositif d'auto-centrage selon l'invention ;
[Fig.3] représente une vue en perspective d'un mode de réalisation d'un premier élément support ;
[Fig.4] représente une vue en perspective d'un plateau mobile selon la présente invention placé sur une base de support ;
[Fig.5] représente une vue en perspective d'un plateau mobile avec un porte-pièce selon la présente invention, placés sur une base de support ; et
[Fig.6] représente une vue en perspective d'un dispositif d'auto-centrage comprenant un plateau mobile selon la présente invention employé dans une machine de déplacement et de positionnement de pièces se déplaçant de poste à poste tel qu'un convoyeur ou plateau tournant.

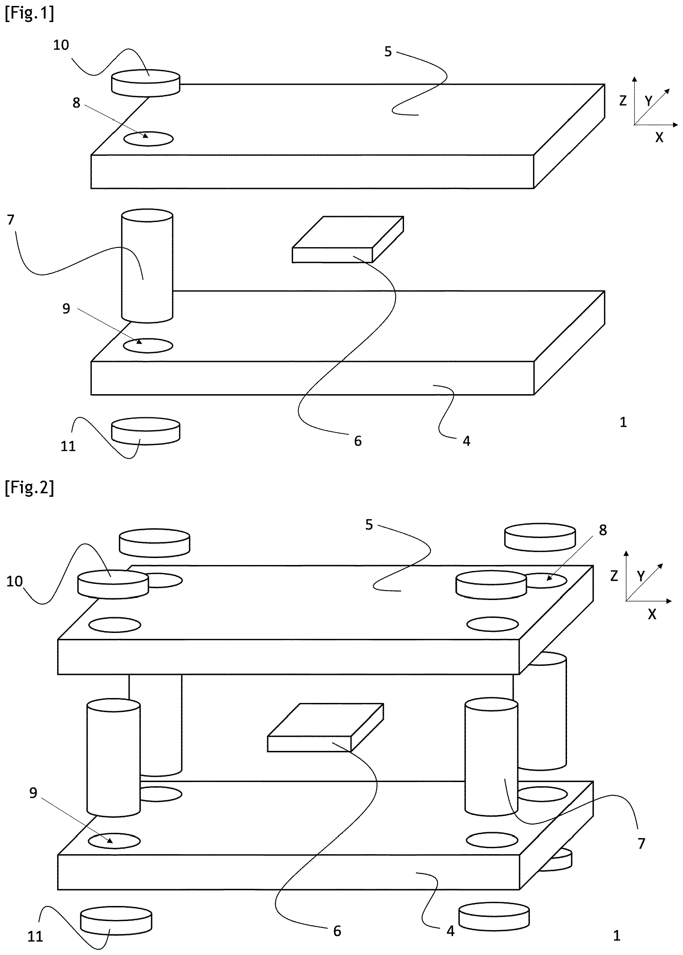

En référence à la figure 1, dans laquelle un plateau mobile 1 est représenté en une vue éclatée en perspective, il peut être vu un premier élément support 4 et un deuxième élément support 5 superposés l'un au-dessus de l'autre selon un axe Z. Lesdits premier élément support 4 et deuxième élément support 5 sont placés de manière parallèle à un plan X-Y (représenté ici par un axe X et un axe Y). Un premier moyen élastique 6 est pris en sandwich entre le premier élément support 4 et le deuxième élément support 5. Ledit au moins un premier moyen élastique 6 est configuré de manière à permettre, d'une part un mouvement de va-et-vient en translation du premier élément support 4 vis-à-vis du deuxième élément support 5 dans au moins une direction parallèle à un plan X-Y sécant à l'axe Z et, d'autre part, un mouvement de va-et-vient en rotation du premier élément support 4 vis-à-vis du deuxième élément support 5 autour de l'axe Z. Il est à noter que les mouvements entre le premier élément support 4 vis-à-vis du deuxième élément support 5 implique nécessairement que si le référentiel est le premier élément support 4, les mouvements sont relatifs au deuxième élément support 5 vis-à-vis du premier élément support 4. En d'autres termes, un mouvement de de va-et-vient en translation du premier élément support 4 vis-à-vis du deuxième élément support 5 dans au moins une direction parallèle à un plan X-Y sécant à l'axe est forcément équivalent à un mouvement de va-et-vient en translation du deuxième élément support 5 vis-à-vis du premier élément support 4 dans au moins une direction parallèle à un plan X-Y sécant à l'axe Z. Il en est de même pour les mouvements de rotation autour des axes X, Y et/ou Z ou de translation par rapport à l'axe Z.

Par ailleurs, dans la figure 1, un deuxième moyen élastique 7 relie le premier élément support 4 et le deuxième élément support 5 en passant d'une part dans au moins une ouverture 9 du premier élément support 4 et verrouillé par au moins un moyen de fixation 11. Ledit au moins un deuxième moyen élastique 7 passe d'autre part dans au moins une ouverture 8 du deuxième élément support 5 et est fixé par au moins un moyen de fixation 10. Les ouvertures 8,9 sont respectivement disposées ici dans un angle du premier élément support 4 et dans un angle du deuxième élément support 5. Lesdits moyens de fixations 10 et 11 permettent ainsi de fixer de manière mobile le premier élément support 4 au deuxième élément support 5 (et inversement) par le biais du deuxième moyen élastique 7. Ledit au moins un deuxième moyen élastique 7 est d'ailleurs disposé de manière à fixer de manière mobile le premier élément support 4 au deuxième élément support 5, ledit au moins un deuxième moyen élastique 7 étant configuré de manière à permettre, d'une part un mouvement de va-et-vient en translation du premier élément support 4 vis-à-vis du deuxième élément support 5 selon l'axe Z et, d'autre part, un mouvement de va-et-vient en rotation du premier élément support 4 vis-à-vis du deuxième élément support 5 autour d'au moins un axe parallèle au plan X-Y.

Le mode de réalisation selon la figure 1 peut être complété par un autre moyen de support mobile telle qu'une articulation mécanique passive (non représentée).

Le mode de réalisation selon la figure 2 reprend les différents éléments selon la figure 1, auxquels sont ajoutés trois autres deuxièmes moyens élastiques 7, ainsi que leurs moyens de fixations 10,11 passant ici au travers des ouvertures correspondantes 8,9 du premier élément support 4 et du deuxième élément support 5. Les ouvertures correspondantes 8,9 sont ici disposées dans les angles du premier élément support 4 et du deuxième élément support 5.

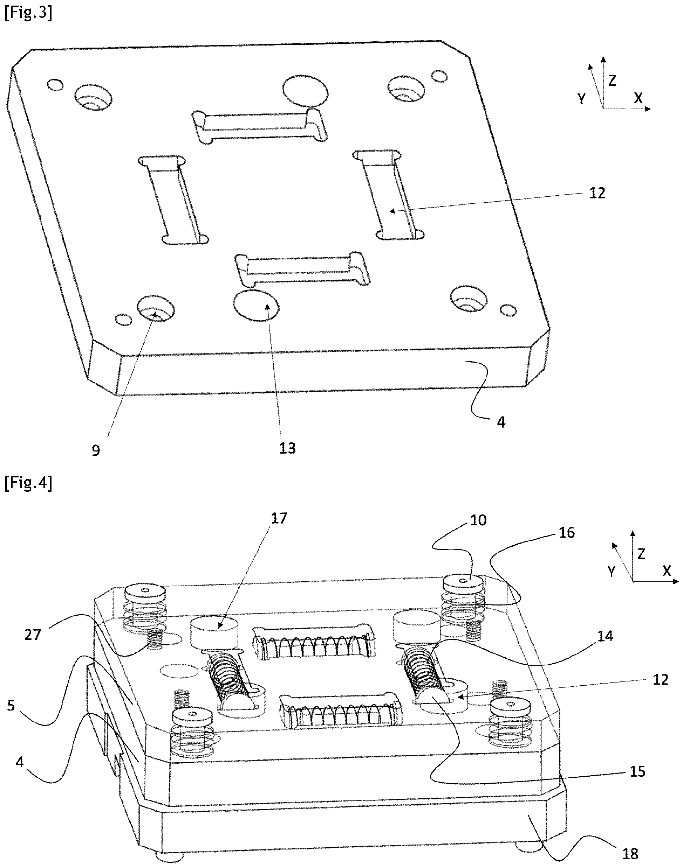

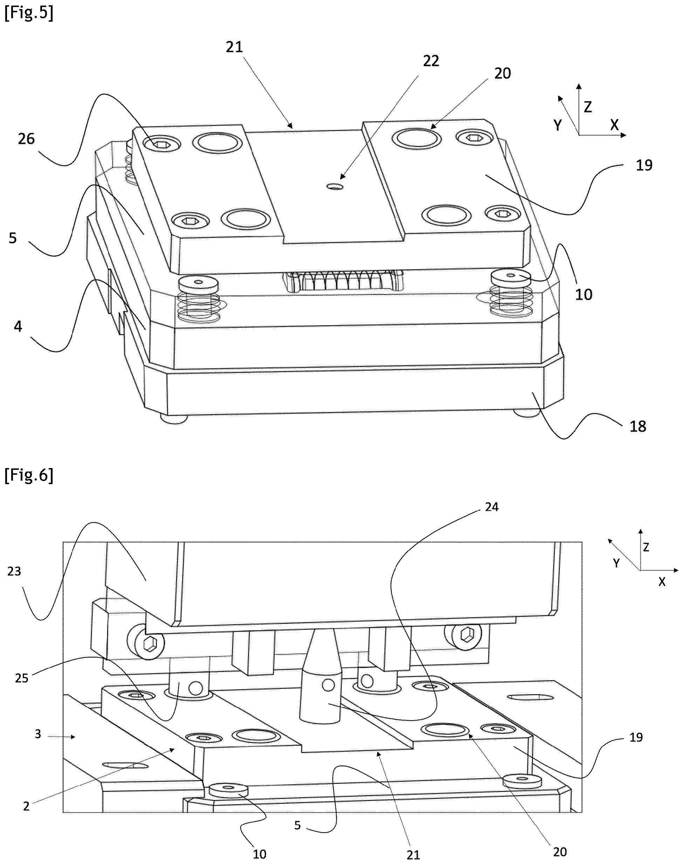

Dans les figures 1 et 2, le premier moyen élastique 6 et deuxième moyens élastique 7 peuvent comprendre un ou des ressorts de premier type 14 et/ou un ou des ressorts de deuxième type 16 comme cela est représenté dans les figures 4 et 5.

Dans la figure 3 est représenté le premier élément support 4 selon la figure 1 et 2 dans lequel il est compris quatre logements d'accueil 12 pour ressorts d'un premier type 14 avec des embouts 15 (par exemple en laiton). Les logements d'accueil 12 sont disposés ici de manière à ce que les axes de déformations privilégiés des ressorts de premier type 14 qu'ils contiennent forment un carré. Il est à noter que les logements d'accueil 12 sont configurés pour être de dimensions plus grandes que le volume occupé par les ressorts de premier type 14 qu'ils accueillent, pour permettre les mouvements de translation dans le plan X-Y et de rotation selon l'axe Z, tout en présentant des moyens de fixation aux extrémités des ressorts de premier type 14. Il peut en être de même pour les logements d'accueil pour les ressorts de deuxième type 16 (non représenté ici). En outre, deux ouvertures 13 du premier élément support 4 permettent la fixation de celui-ci dans le dispositif final.

La figure 4 comprend un premier élément support 4 selon la figure 3 sur lequel est positionné un deuxième élément support 5. Dans les quatre logements d'accueil 12 sont placés des ressorts d'un premier type 14 avec des embouts 15 permettant d'une part un mouvement de va-et-vient en translation du premier élément support 4 vis-à-vis du deuxième élément support 5 dans au moins une direction parallèle à un plan X-Y sécant à l'axe Z et, d'autre part, un mouvement de va-et-vient en rotation du premier élément support 4 vis-à-vis du deuxième élément support 5 autour de l'axe Z. Les embouts 15 peuvent être en laiton. Ici, huit embouts 15 tel que des embouts 15 en laiton, sont utilisés. Quatre deuxièmes moyens élastiques 7, prenant la forme de ressort d'un deuxième type 16, sont disposés dans les angles du premier élément support 4 et du deuxième élément support 5 avec des moyens de fixation 10 de manière à fixer de manière mobile le premier élément support 4 au deuxième élément support 5. Ici les moyens de fixation 10 sont des vis à têtes plates dont les dimensions sont adaptées vis-à-vis des quatre ressorts d'un deuxième type 16 pour permettre, d'une part un mouvement de va-et-vient en translation du premier élément support 4 vis-à-vis du deuxième élément support 5 selon l'axe Z et, d'autre part, un mouvement de va-et-vient en rotation du premier élément support 4 vis-à-vis du deuxième élément support 5 autour d'au moins un axe parallèle au plan X-Y. L'ensemble comprenant le premier élément support 4, le deuxième élément support 5, les ressorts de premier type 14, les ressorts de deuxième type 16, les moyens de fixations 10 et les embouts 15, est placé sur une base de support 18. Le deuxième élément support 5 peut comprendre quatre ouvertures 17 d'alésage permettant l'auto-centrage des pièces pouvant être posées sur celui-ci. L'utilisation de ressorts de premier type 14 et de ressorts de deuxième type 16 qui comprennent chacun des axes de déformations privilégiés, mais aussi des axes de déformations secondaires, permet ici les mouvements de translations et de rotations. Les espaces dans lesquels sont placés ces ressorts de premier type 14 et de deuxième type 16 doivent donc être adaptés à leurs déformations selon des axes de déformations privilégiés et selon des axes de déformations secondaires. Le deuxième élément support 5 peut comprendre des ouvertures filetées 27 pour la fixation d'autres éléments tel qu'un élément porte-pièce 19 par le biais de moyens de fixation 26 comme représenté en figure 5.

En référence à la figure 5, un élément porte-pièce 19 est placé sur l'ensemble comprenant le premier élément support 4, le deuxième élément support 5, les ressorts de premier type 14, la base de support 18, les ressorts de deuxième type 16, les moyens de fixations 10 et les embouts 15, tel que représenté en figure 4. L'élément porte-pièce 19 comprend quatre ouvertures 20 configurés pour pouvoir se placer au-dessus des quatre ouvertures 17 d'alésage décrits dans la figure 4, permettant ainsi un auto-centrage. Les quatre ouverture 20 du porte-pièce 19 peuvent comprendre des moyens d'amortissement (par exemple en caoutchouc ou en plastique) et/ou des moyens permettant un meilleur coulissement pour faciliter l'auto-centrage. Des moyens de fixation 26 de l'élément porte-pièce 19 permettent de fixé celui-ci au deuxième élément support 5. L'élément porte-pièce 19 peut éventuellement comprendre une dépression 21 de dimensions et formes variables et adaptés au procédé industriel auquel il est destiné. En outre, l'élément porte-pièce 19 peut éventuellement comprendre un filetage 22 pour lui fixer un outil 24 adapté au procédé industriel auquel il est destiné.

En référence à la figure 6, l'ensemble comprenant le premier élément support 4, le deuxième élément support 5, les ressorts de premier type 14, la base de support 18, les ressorts de deuxième type 16, les moyens de fixations 10, les embouts 15, et le porte-pièce 19 tel que représenté en figure 5 est placé dans un dispositif d'auto-centrage 2 employé dans une machine 3 de déplacement et de positionnement de pièces se déplaçant de poste à poste tel qu'un convoyeur ou plateau tournant. Ainsi un manipulateur 23 permet de déplacer des pièces (non représentées, sur le porte-pièce 19 lequel porte-pièce 19 comprend un outil 24. L'auto-centrage peut être assuré par au moins deux pions 25 qui s'insèrent dans au moins deux ouvertures 20 du porte-pièce 19. Les deux pions 25 ont donc le rôle de guide, et comme le porte-pièce 19 est mobile, dû au fait qu'il est sur le plateau mobile 1 selon la présente invention, l'outil 24 (qui peut d'ailleurs aussi être une pièce à assembler, est parfaitement aligné avec le manipulateur 23.

L'auto-centrage permet au procédé de mise en oeuvre dit de « dépose » (par le biais d'un manipulateur 23) d'accoster la partie inférieure avec deux pions 25 de positionnement (centreur-localisateur), réduisant ainsi la chaîne de cotes entre les pièces.

Dans l'ensemble des figures 3 à 6, le plateau mobile selon la présente invention comprend le premier élément support 4, le deuxième élément support 5, les ressorts de premier type 14, les ressorts de deuxième type 16, les moyens de fixations 10, les embouts 15, et des logements d'accueil 12.

## Revendications

1. Plateau mobile (1) pour dispositif d'auto-centrage (2) comprenant :
- un premier élément support (4) et une deuxième élément support (5) placés l'un au-dessus de l'autre selon un axe Z,
- au moins un premier moyen élastique (6) placé entre le premier élément support (4) et le deuxième élément support, ledit au moins un premier moyen élastique (6) étant configuré de manière à permettre, d'une part un mouvement de va-et-vient en translation du premier élément support (4) vis-à-vis du deuxième élément support (5) dans au moins une direction parallèle à un plan X-Y sécant à l'axe Z et, d'autre part, un mouvement de va-et-vient en rotation du premier élément support (4) vis-à-vis du deuxième élément support (5) autour de l'axe Z ; et
- au moins un deuxième moyen élastique (7) disposé de manière à fixer de manière mobile le premier élément support (4) au deuxième élément support (5), ledit au moins un deuxième moyen élastique (7) étant configuré de manière à permettre, d'une part un mouvement de va-et-vient en translation du premier élément support (4) vis-à-vis du deuxième élément support (5) selon l'axe Z et, d'autre part, un mouvement de va-et-vient en rotation du premier élément support (4) vis-à-vis du deuxième élément support (5) autour d'au moins un axe parallèle au plan X-Y.

2. Plateau mobile (1) selon la revendication 1, **caractérisé en ce que** ledit au moins un premier moyen élastique (6) comprend au moins un ressort d'un premier type (14) présentant un axe de déformation privilégié, ledit au moins un ressort de premier type (14) étant disposé de manière à ce que son axe de déformation privilégié est, au repos, parallèle au plan X-Y.

3. Plateau mobile (1) selon la revendication 2, **caractérisé en ce que** ledit au moins un premier moyen élastique (6) comprend au moins deux desdits ressorts de premier type (14), lesdits au moins deux ressorts de premier type (14) présentant des axes de déformations privilégiés sécants.

4. Plateau mobile (1) selon la revendication 3, **caractérisé en ce que** ledit au moins un premier moyen élastique (6) comprend quatre desdits ressorts de premier type (14), dont les axes de déformations privilégiés forment un polygone, tel qu'un carré ou un rectangle.

5. Plateau mobile (1) selon l'une quelconque des revendications 1 à 4 **caractérisé en ce que** ledit au moins un deuxième moyen élastique (7) comprend au moins un ressort d'un deuxième type (16) présentant un axe de déformation privilégié, ledit au moins un ressort de deuxième type (16) étant disposé de manière à ce que son axe de déformation privilégié est, au repos, parallèle à l'axe Z.

6. Plateau mobile (1) selon la revendication 5, **caractérisé en ce que** ledit au moins un deuxième moyen élastique (7) comprend quatre desdits ressorts de deuxième type (16).

7. Plateau mobile (1) selon l'une quelconque des revendications 2 à 6 **caractérisé en ce que** lesdits ressorts de premier type (14) comprennent des embouts (15), par exemple en laiton, configurés de manière à leur permettre d'être reliés au premier élément support (4) et/ou au deuxième élément support (5).

8. Plateau mobile (1) selon l'une quelconque des revendications 1 à 7 **caractérisé en ce que** le premier élément support (4) et le deuxième élément support (5) comprennent chacun au moins un logement d'accueil (12) pour accueillir ledit au moins un premier moyen élastique (6).

9. Dispositif d'auto-centrage (2) comprenant :
- un plateau mobile (1) selon l'une quelconque des revendications 1 à 8 ;
- un moyen d'accostage à un repère fixe sur ledit plateau mobile (1), telle qu'une ouverture (17, 20), une dépression (21) ou une excroissance tel qu'un pion (25) ; et
- optionnellement un porte-pièce (19) relié audit plateau mobile (1), le moyen d'accostage à un repère fixe pouvant alors être placé sur le porte-pièce (19).

10. Machine (3) de déplacement et de positionnement de pièces se déplaçant de poste à poste tel qu'un convoyeur ou plateau tournant comprenant un dispositif d'auto-centrage (2) selon la revendication 8 ou 9.
